# EUROPEAN PATENT APPLICATION

(11) **EP 1 739 138 A1**
(43) Date of publication of application: **03.01.2007**
(21) Application number: 05745296.3
(22) Date of filing: 18.04.2005
(51) Int. Cl.: C09C 3/06, C09C 1/00

(54) **PIGMENT HAVING ANGLE DEPENDENCE OF THE INTERFERENCE COLORS AND ITS PRODUCTION PROCESS**

(30) Priority: 19.04.2004 CN 200410013060
(71) Applicant: Fu, Jiansheng, Wuhan, Hubei 430068 (CN); Peng, Yitting, Wuchang Zone Wuhan, Hubei 430068 (CN); Tian, Xiaohui, 50-17 Lijiadunyicun, Hongshan Zone Wuhan, Hubei 430068 (CN)
(72) Inventor: Fu, Jiansheng, Wuhan, Hubei 430068 (CN); Peng, Yitting, Wuchang Zone Wuhan, Hubei 430068 (CN); Tian, Xiaohui, 50-17 Lijiadunyicun, Hongshan Zone Wuhan, Hubei 430068 (CN)
(74) Representative: Arth, Hans-Lothar
(86) International application number: PCT/CN2005/000520
(87) International publication number: WO 2005/100486

(57) **Abstract**

The invention disclosed a pigment having angle dependence of the interference colors and its production process, in which mica is used as the substrate and the first metal oxide coating with high refractive index has the optical thickness of silver to golden interference color. And the second metal oxide coating with low refractive index has the optical thickness of the second circle green to the fourth circle interference color. The third coating is a highly refractive metal oxide. The lowly refractive metal oxide is SiO₂ and the highly refractive metal oxide is TiO₂, SnO₂, Fe₂O₃, Fe₃O₄, CoO, Co₂O₃, ZrO₂, Cr₂O₃ or their mixtures as well as complexes. The mica substrate is wet-milled mica powders with a thickness of 0.1-0.9 micrometers and a diameter of 5-250 micrometers. The process involves wet chemical hydrolysis steps to alternately deposit the coatings and modulating the optical thickness of each coatings, to produce the pigment having angle dependence of the interference colors, which has various hues and ranges of angle dependence of the interference colors as well as higher brightness and vivid colors.

## Description

### Field

This invention concerns a kind of pigment with a color transfer effect and its production procedure. The pigment with pearl luster is made of many chemical raw materials and natural minerals and can show various interfering lights due to different observation angles.

### Background

Because of the admiration for beauty, people in different historical periods have developed various colorful pigments and dyestuffs to beautify life. Luster pigment originated from pearl and then pearl luster pigment was developed. The early pearl pigment is the guanine got from the natural fish scale, and because of its limited amount and high price, people have began to switch to artificial synthetic pearl luster pigment which can fall into two major forms: one is the piece-like inorganic compound of BiOCl and calcium sodium silicate; the other is the multiple-tiered pearl luster pigment formed with coated metal oxides and non-metal oxides on the surface of base of natural white mica and synthetic mica, with methods like evaporating and depositing, co-ion splashing, wet chemical arts. The reason why pearl luster pigments can produce pearl luster effect is that some of incidence light is reflected, some is refracted, some is absorbed, and some is refracted and reflected for many times, which can form various interfering lights and then show pearl or rainbow effect.

The serial pearl luster pigments with a mica base, according to different grain diameters of the micas, can make the reflected or refracted light has different luster, for instance, those with small grain diameter can produce silk-like luster, while others with big one can produce glittering luster.

Because of the difference between the widths of coated metal oxides, there are many different interfering lights like silver white, yellow, orange, red , purple, blue and green ones which are all monochromatic.

As a lead compound, the crystal-like artificially synthetic calcium sodium silicate is not applied in many cases and often used with few amount. Because of its bad climate-resistance and too big specific gravity, the application range of the crystal-like artificially synthetic The mica serial pearl luster pigment, because of the metal oxides with a high index of refraction like TiO₂ and/or Fe₂O₃ coated on the mica surface, has excellent climatic and chemical resistance. What is more, through classification of it, pigments with different grain diameters can be produced. Therefore, this kind of pigment is widely used in car coating, paints, coating, cosmetics, special wrapping paper, decorative paper, plastics, plastic color agglomerate, artificial leather and various printing inks and so on. However, the interfering lights of this pigment can be only monochromatic and do not have the effect of color changing due to angle change. If it is dyed , it is only double-colored and can not be used in some fields for certain reasons.

At present, only such companies like Warck, BSF, Merck in Germany, Flex in U.S.A can produce the pigment with an color transfer effect. Here an analysis is made on the advantages and disadvantages of their patents are made.
1. Flex in U.S.A adopts opaque tinsel or metal oxides as the base and coats alternatively the tinsel with metal oxides of high and low indexes of refraction on its one or both sides with vacuum film-plating. Through controlling the optical coating width of the metal oxides, different color changes and zones of color change can be obtained. The base is stripped from net with certain meshes or dissolvable films. Therefore, precision instruments, strict technological and highly pure chemical materials are needed with few productions and high production cost. What is more, it is difficult to control its colors and change zones. Besides, its wide use is limited because of its high price.
2. BSF in Germany adopts aluminum powders or artificially synthetic ferric oxides (made under high temperature and pressure) as the base whose surface is coated alternatively with metal oxides of high and low indexes of refraction with VCD method. The inert gas brings into boiling bed the metal compounds absorbing on the base and decomposing into metal oxides which deposit on the base surface to needed width. There is a problem of effective dispersing of the base in the cauldron and amount measurement. What is more, there is also environmental problem for the organic metal compound. Besides, it is expensive and limited in application because of the complicated procedure, precision instruments, high cost of base making, strict procedure control and high price of the raw materials.
3. Merck in Germany adopts artificially synthetic SiO₂ as the base (made by plating hydrate glass with certain density on a special instrument and drying and stripping it), and hydrolyses dissolvable inorganic metal and nonmetal compounds to produce hydrate metal oxide of high and low indexes of refraction which deposits and is coated alternatively on the base. Because the procedure is wet chemical, it is easy to operate, control the optical width of the needed coating and manufactured. What is more, it is impossible to obtain the effect of color change due to angle change by plating a tier of metal oxide of a high index of refraction on the SiO₂ base surface. However, the width of the base is less than 1 micron, usually between 200 and 500 microns, which causes difficulty to base making with high cost, low production and precision instruments. Besides, the process of plating, drying and stripping causes great wear and tear to the instruments and makes the procedure complicated so as to cause high cost of base making. As a result, the pigment is highly cost and expensive, which limits its application.
4. Warck in Germany adopts organic polymerized silicon liquid crystals with certain width, grinds and sifts out them to pigments. As liquid crystals, the pigment has a life span and can not be applied in some fields. What is more, the high price of liquid crystals limits its application.

American patent US 6,656,259 describes the pigment with an color transfer effect and its production procedure. The pigment adopts piece-like SiO₂ as its base whose surface is coated with one or multiple-tiered transparent or semi-transparent metal oxides.

American patent US 6,692,561 is multiple-tired strong interfering light pigment with mica as its base. It claims that color changes due to angle change and the pigment glitters between interfering lights. The first tier coated on the mica base is metal oxide with a low index of refraction, but the optimal value of the width and its technical significance are not given. Therefore, it is considered that the invention does not solve the substantial problem. According to the statistic analysis, the invention measures from a fixed angle. As a result, the range of color change of the pigment is limited and it still belongs ordinary pearl luster pigment , not reaching the effect of color change due to angle change, for such pigment should be tested by multiple-angled photometer for at least five times.

### Summary

The base of the pigment with a color transfer effect is alternatively coated with metal oxides of different indexes of refraction and outer protection tire. The feature of the pigment lies in its base of natural mica whose surface is coated with three-tiered metal oxides. The first tier is the metal oxide with high index of refraction to smooth the step-like mica surface. The second tire is the metal oxide with low index of refraction. The third tire is the metal oxide with high index of refraction.

The width of the second metal oxide with low index of refraction coated on the surface of the mica base is more than or the same as the optical width of the second round interfering light.

The width of the first metal oxide with high index of refraction coated on the surface of the mica base is the optical one of interfering silver white-golden yellow lights.

The width of the second metal oxides with low index of refraction coated on the mica base is the optical one of from the second round green to the fourth round interfering lights.

The second metal oxide with a low index of refraction is SiO₂.

The metal oxides with a high index of refraction are TiO₂, SnO₂, Fe₂O₃, Fe₃O₄, CoO, Co₂O₃, ZrO₂, Cr₂O₃ or their mixture or compounds.

The production procedure of the pigment goes as follows: put wet grinded mica powders with specific standards into some soft water and stir it into suspension solution, heat it to 60-90°C , then adjust its PH value to 2-9 with thin HCL or Na(OH) solution; add an measured amount of dissolvable inorganic salt solution with a high index of refraction , keep its PH value by adding some HCL or Na(OH) solution with specific density to deposit hydrate metal oxide with high index of refraction and needed width on the surface of mica, and stir it for 30 minutes in constant temperature for ageing ; adjust its PH value to 6-14 with Na(OH) solution, add an measured amount of dissolvable inorganic salt solution with a low index of refraction, keep its PH value by adding some HCL solution to make the metal oxide with a low index of refraction deposit to needed width , and stir it for 30 minutes in constant temperature for ageing; adjust its PH value to 2-9 with thin HCL or Na(OH) solution, add an measured amount of inorganic salt solution with a high index of refraction , keep its PH value by adding some HCL or Na(OH) solution with specific density to obtain needed tones and zones of color changes and stir it for 30 minutes in constant temperature for ageing; flitter, cleanse, dry , forge , sift out and dry..

The dissolvable inorganic solution with a high index of refraction is chlorine compound, like TiCl₄, TiOCl₂, SnCl₄, SnCl₂, FeCl₃, FeCl₂, CoCl₂, ZrOCl₂ and CrCl₃.

The dissolvable inorganic metal salt solution with a low index of refraction is hydrate glass compound.

Organic or inorganic ferrous pigment or outer protection tier can be further coated.

The advantages of the invention:
1. The pigment of the invention adopts mica as its base, which is easy to obtain and much cheaper than opaque tinsel, metal oxides, synthetic SiO₂ and organic liquid crystal silicon, thus greatly reduces the price of the pigment and broadens its application field.
2. Compared with the US 6,656,259 pearl luster pigment with mica as its base, the pigment of the invention coats in the first tire of its mica base with metal oxides with a high index of refraction which is easy to reach the needed width. At the same time, the optimal width, which is a key to ensure the brightness of color of the pigment, is defined as the optical one of interfering silver white-golden yellow
3. Compared with the US 6,656,259 pearl luster pigment with mica as its base, the pigment of the invention coats in the second tire of its mica base with metal oxides with a low index of refraction whose width is the same as or more than the optical one of the second round interfering light. Especially, the optical width between the second round green and the fourth interfering light is the technical key to produce various interfering lights. As experiments have proved, the width less than the optical one of the second round green can not produce a color transfer effect. However, the invention solves the problem.
4. The production procedure of the invented pigment can meet the needed width. It is inflexible to coat the mica surface with metal oxides with high and low indexes of refraction fro once or many times, thus it is possible to produce various tones and zones of color change which can be double or triple or multiple, covering all colors.
5. With wet chemical hydrolysis and coating, the pigment can be manufactured. With dissolvable inorganic metal compounds, it is easy to operate without environmental pollution. With wet chemical hydrolysis, it is easy to control the coating width, in other words, by controlling the change of pigment evaporating and depositing of the pigment, it is easy to operate and control the stable quality of products. As the base of the invention, mica (or synthetic mica) has abundant resource. What is more, mica powders with low price and without toxin is easy to processed and produced with low cost, thus greatly reduces the cost of the pigment. It can be widely used as paint, ink, plastics, cosmetics, pottery material, printing ink and surface painting, and in paper an glass-making , multiple paint spraying , in hydrate an solution systems and for safety.

### Detailed Description

The pigment with a color transfer effect, with wet chemical hydrolysis, coats alternatively metal oxides with high and low indexes of refraction on the surface of wet grinded natural mica with a width of 0.1-0.9 microns and a grain diameter of 5-250 microns. Through adjusting the optical widths of different tiers, bright-colored pigments with a color transfer effect with various zones of color and color change can be produced.

Being tire-structured, natural mica can be cut into thin pieces until monocrystals. However, it is very difficult and almost impossible to make it become monocrystals. Usually, wet grinded mica powders are 0.1-0.9 wide, so it is inevitable to have mica grains with rough surface, which can be accepted in making ordinary pearl luster pigment , but impractical to produce pigments with a color transfer effect and need solutions. Therefore, it is necessary to make improvement in coating structure.

The invention coats metal oxides with a high index of refraction on the surface of mica powders as to smooth its step-like surface and obtain unanimous optical nature. Then it directly coats hydrate SiO₂ to needed width, and coats other metal oxides with a high index of refraction to get a color transfer effect.

In some special cases, the pigment of the invention can be further processed or coated as to meet requirements.

The basic procedure of the invention:
1. Pour wet grinded mica powders with specific standards into some soft water and stir it into suspension solution, heat it to 60-90°C, at best 75-80°C, then adjust its PH value to a certain range with thin HCL solution (PH 2.2 , when TiO₂ is coated) ; add an measured amount of dissolvable inorganic salt solution with a high index of refraction , keep its PH value by adding some Na(OH) solution with specific density to deposit hydrate metal oxide with high index of refraction and needed width on the surface of mica, reaching the optical width of interfering silver white-golden yellow, and stir it for 30 minutes in constant temperature.
2. Adjust its PH value to 6-12, at best 6.5-9.5, with Na(OH) solution, add an measured amount of dissolvable inorganic salt solution with a low index of refraction, keep its PH value by adding some HCL solution. When the width of the second tire metal oxides is the same as or less than the optical one of the second round interfering light, especially the second round green, stir it for 30 minutes in constant temperature. Generally speaking , various colors can be produced after the second round green, and the optical width between the second round yellow to the fourth round interfering light is the optical , the optical one more than the fourth can also produce a color transfer effect, however , with an increased cost.
3. Adjust the PH value of the suspension solution to 2-5 with thin HCL (according to the PH value of hydrolysis of metal oxides with a high index of refraction, for example, when coated with Fe₂O₃, PH value is 3.5), add an measured amount of inorganic metal salt solution with a high index of refraction to reach some needed tones and zones of color change, stir it for 30 minutes in constant temperature and flitter, cleanse, dry, forge, sift out and dry.

The forging temperature has something to do with the coating material , usually 250--1000°C, at best 350--900°C. When coating pigment, it is accepted to separate, dry and forge it after coating one tire and then switch to another tire.

If needed, the finished pigment can be further processed or coated in order to make it have a stable resistance against heat, light, climate, or chemistry, or make it effectively attach or detach with some materials.
The pigment of the invention adopts mica as its base whose surface is alternatively coated with metal oxides with high and low indexes of refraction, which can be done for once or many times. Therefore, It is inflexible and possible to produce various tones and zones of color change which can be double or triple or multiple, covering all colors. The pigment of the invention applies in cosmetics, car paint, coating, printing ink, decorative material, plastics, rubber, decorative wrapping paper, glass, pottery and all fields in which pearl luster pigment is used. With a low price, it is widely used.

If inorganic or organic colored pigment is further coated on the outer side of metal oxides or BiOCl , such as ferrous metal oxides like needle iron ore, magnetite, hematite, chromium oxide, titanium low oxide and chromium/ iron compound, and colored pigments like Berlin blue, Prussia blue, vanadium bismuth, chromium hydroxide, alumina cobalt, ultramarine, Tenard's Blue, sulfured cadmium, selenium compound, chromate pigments and black carbon pigments, or organic colored pigments like indigotin, thioindigo and its derivatives, nitric pigments, pigments, benzimidazole, anthraquinone indanthrene dye,dihydroxy quinoline and acridine, metal sulfide, hydrous metal sulfide and magenta, the color of the pigment powders will have an obvious change and produce an interesting color effect.

The pigment of the invention can be conveniently blended with organic dyes, inorganic pigments and other inorganic single or multiple-tiered pigments like the traditional pearl luster pigments and LCPs based on phyllosillicate, glass, SiO₂ or metal base as well as the traditional adhesives and fittings with any proportion.

The metal oxides with a high index of refraction are TiO₂, SnO₂, Fe₂O₃, Fe₃O₄, CoO, Co₂O₃, ZrO₂, Cr₂O₃ or their mixture or compounds.

The metal oxides with a low index of refraction are SiO₂.

The dissolvable inorganic salts which can hydrolyze into metal oxides with a high index of refraction are chlorine compounds, like TiCl₄, TiOCl₂, SnCl₄, SnCl₂, FeCl₃, FeCl₂, CoCl₂, ZrOCl₂ and CrCl₃ and so on.

The dissolvable inorganic salts which can hydrolyze into metal oxides with a low index of refraction are water glass, sodium silicate, AlCl₃, NaAlO₂ and borax and so on.

The piece-like materials that can be used as base in the invention may be all piece-like ones, including natural and artificially made piece-like materials, like natural mica, synthetic mica, natural mica iron, piece-like Fe₂O₃, graphite scales, mica serial silver white or golden yellow pearl luster pigment. The main material is mica like white mica, golden mica, silk mica, black mica, with high-quality white mica as its majority.

The white mica powder adopted in the invention is forged from natural white mica under high temperature with oxygen, wetly grinded and processed chemically so as to obtain mica powders with needed grain diameter and width by grade as the base.

The base of the invention can also be obtained by directly wet grinding and chemical processing without forging under high temperature so as to obtain mica powders with needed grain diameter and width by grade as the base.

The main structure of the pigment of the invention is symmetrical, like:
Fe₂O₃/SiO₂/Fe₂O₃/mica/Fe₂O₃/SiO₂/Fe₂O₃;
TiO₂/SiO₂/TiO₂/mica/TiO₂/SiO₂/TiO_{2;}
Cr₂O₃/TiO₂/SiO₂TiO₂/mica/TiO₂/SiO₂/TiO₂/Cr₂O₃;
TiO₂/SiO₂/Fe₂O₃/mica/Fe₂O₃SiO₂/TiO₂;
Fe₂O₃/SiO₂/TiO₂/mica/TiO₂/SiO₂/Fe₂O₃;
Fe₂O₃.TiO₂/SiO₂/Fe₂O₃.TiO₂/mica/Fe₂O₃.TiO₂/SiO₂/Fe₂O₃.TiO₂;
TiO₂/Fe₂O₃/SiO₂/Fe₂O₃/TiO₂/mica/TiO₂/Fe₂O₃/SiO₂/Fe₂O₃/TiO₂;
TiO₂/SnO₂/TiO₂/SiO₂/TiO₂/SnO₂/TiO₂/SiO₂/mica/TiO₂/SnO₂/TiO₂/SiO₂/TiO₂/SnO₂ /TiO₂/SiO₂;
Fe₂O₃/SiO₂/Fe₂O₃/SiO₂/Fe₂O₃/SiO₂/Fe₂O₃/mica/Fe₂O₃/SiO₂/Fe₂O₃/SiO₂/Fe₂O₃/ SiO₂/Fe₂O₃;
TiO₂/CoO/SiO₂/CoO/TiO₂/mica/TiO₂/CoO/SiO₂/CoO/TiO₂;
CoO/Fe₂O₃/SiO₂/CoO/Fe₂O₃/mica/Fe₂O₃/CoO/SiO₂/Fe₂O₃/CoO;

The structures above as well as other ones are within the scope of the invention.

The invention can do coating for multiple times based on the basic structures above, that is to coat the mica surface with metal oxides of high and low indexes of refraction for many times as to get the needed tones and color transfer effect, like:
------ Fe₂O₃/SiO₂/Fe₂O₃/ SiO₂/Fe₂O₃/ SiO₂/Fe₂O₃/mica/ Fe₂O₃/SiO₂/Fe₂O₃/ SiO₂/Fe₂O₃/ SiO₂/Fe₂O₃ ----;
------TiO₂/ SiO₂ / TiO₂/ SiO₂ / TiO₂/ SiO₂ / TiO₂/mica/ TiO₂/ SiO₂ / TiO₂/ SiO₂ / TiO₂/ SiO₂ /TiO₂ ------;

The structure above is included in the invention and can be coated for many times.

Now give some examples about the production procedure of the pigment of the invention.

Example 1: The structure of the pigment is Fe₂O₃/SiO₂/Fe₂O₃/mica/ Fe₂O₃/SiO₂/Fe₂O₃;

Suspend 16g white mica powders with a grain diameter of 10-60 microns in the soft water and stir and heat it to 75°C.

Adjust the PH value of the suspension to 3.5, add 18% HCL as well as measured 300ml 10% FeCl₃ solution, at the same time to keep its PH value by adding 15% Na₃OCl drop by drop, and at last stir it at constant temperature for 15 minutes.

Adjust the PH value of the suspension to 9.5 with 32% Na(OH) solution and stir it for15 minutes.

Add 2L sodium silicate solution (7g/l SiO₂)) drop by drop, and at the same time keep PH value at 9.5 by adding 15% HCL drop by drop and at last stir it for 30 minutes.

Adjust the PH value of the suspension to 3.5 with 18% HCL solution and stir it for 30 minutes. Add 70 ml measured sodium silicate solution (120g/l FeCl₃₎) drop by drop, and at the same time keep PH value by adding 15% HCL drop by drop and at last stir it for 15 minutes.

The production is flittered, cleansed and dried , and forged at 500°C, sieved for 100 times and dried, then blended with certain proportion with adhesives made of hydrate oxidized starch and PVA, and scraped on the scraping paper with white and black bottom.

The color value is shown by floating between purplish red to yellow-green which can be observed from a vertical-horizontal angles

The core of the invention lies in its base of natural mica whose surface is coated with three-tiered metal oxides. The first tier is the metal oxide with high index of refraction. The second tire is the metal oxide with low index of refraction. The third tire is the metal oxide with high index of refraction. Especially, the width of the first tier is the optical one of interfering silver white-golden yellow , and the width of the second is the same as or more than the optical one of the second round interfering lights. No matter what kind of material is adopted or how many tires are coated, or how the width varies, they are within the protection of the invention.

## Claims

1. A pigment with a color transfer effect, whose base is alternatively coated with metal oxides of different indexes of refraction and outer protection tire. The feature of the pigment lies in its base of natural mica whose surface is coated with three-tiered metal oxides. The first tier is the metal oxide with high index of refraction to smooth the step-like mica surface. The second tire is the metal oxide with low index of refraction. The third tire is the metal oxide with high index of refraction.

2. According to claim 1, the width of the second metal oxide with low index of refraction coated on the surface of the mica base is more than the optical width of the second round interfering light.

3. According to claim 1 or 2, the width of the first metal oxide with high index of refraction coated on the surface of the mica base is the optical one of interfering silver white-golden yellow lights.

4. According to claim lor 2, the width of the second metal oxides with low index of refraction coated on the mica base is the optical one of from the second round green to the fourth round interfering lights.

5. According to claim 1, the second metal oxide with a low index of refraction is SiO₂.

6. According to Right Requirement 1 or 2, the metal oxides with a high index of refraction are TiO₂, SnO₂, Fe₂O₃, Fe₃O₄, CoO, Co₂O₃, ZrO₂, Cr₂O₃ or their mixture or compounds.

7. According to claim 1-6, the production procedure of the pigment goes as follows: put wet grinded mica powders with specific standards into some soft water and stir it into suspension solution, heat it to 60-90°C , then adjust its PH value to 2-9 with thin HCL or Na(OH) solution; add an measured amount of dissolvable inorganic salt solution with a high index of refraction , keep its PH value by adding some HCL or Na(OH) solution with specific density to deposit hydrate metal oxide with high index of refraction and needed width on the surface of mica, and stir it for 30 minutes in constant temperature for ageing ; adjust its PH value to 6-4 with Na(OH) solution, add an measured amount of dissolvable inorganic salt solution with a low index of refraction, keep its PH value by adding some HCL solution to make the metal oxide with a low index of refraction deposit to needed width , and stir it for 30 minutes in constant temperature for ageing; adjust its PH value to 2-9 with thin HCL or Na(OH) solution, add an measured amount of inorganic salt solution with a high index of refraction , keep its PH value by adding some HCL or Na(OH) solution with specific density to obtain needed tones and zones of color changes and stir it for 30 minutes in constant temperature for ageing; flitter, cleanse, dry , forge , sift out and dry..

8. According to claim 7, the dissolvable inorganic solution with a high index of refraction is chlorine compound, like TiCl₄, TiOCl₂, SnCl₄, SnCl₂, FeCl₃, FeCl₂, CoCl₂, ZrOCl₂ and CrCl₃.

9. According to claim 7, the dissolvable inorganic metal salt solution with a low index of refraction is hydrate glass compound.

10. According to claim 7-9, organic or inorganic ferrous pigment or outer protection tier can be further coated.
